# EUROPEAN PATENT APPLICATION

(11) **EP 4 750 023 A1**
(43) Date of publication of application: **27.05.2026**
(21) Application number: 24853655.9
(22) Date of filing: 08.08.2024
(51) Int. Cl.: H04L 45/24

(54) **INFORMATION PROCESSING METHOD AND APPARATUS**

(30) Priority: 17.08.2023 CN 202311044698
(71) Applicant: HUAWEI TECHNOLOGIES CO., LTD., Shenzhen 518129 (CN)
(72) Inventor: HUANG, Jinghan, Shenzhen, Guangdong 518129 (CN); WANG, Haibo, Shenzhen, Guangdong 518129 (CN); DONG, Jiajia, Shenzhen, Guangdong 518129 (CN)
(74) Representative: Gill Jennings & Every LLP
(86) International application number: PCT/CN2024/110716
(87) International publication number: WO 2025/036245

(57) **Abstract**

Embodiments of this application disclose an information processing method, applied to a first network device. The first network device may determine that a first specific route sent by a second network device to the first network device is unavailable, and generate a first message. The first message includes a route prefix of the first specific route, next-hop information, and a route prefix of an aggregated route, the aggregated route corresponds to the first specific route and a second specific route, and the second specific route is available. The next-hop information indicates a port that is on the first network device and that is used for communicating with a third network device. After generating the first message, the first network device may send the first message to the third network device, so that the third network device determines that the first specific route corresponding to the aggregated route is unavailable. Correspondingly, the third network device may perform a corresponding processing measure, so that traffic that matches the first specific route is not forwarded to the first network device, avoiding a traffic interruption.

## Description

This application claims priority to Chinese Patent Application No. 202311044698.2, filed with the China National Intellectual Property Administration on August 17, 2023, and entitled "INFORMATION PROCESSING METHOD AND APPARATUS", which is incorporated herein by reference in its entirety.

### TECHNICAL FIELD

This application relates to the communication field, and in particular, to an information processing method and apparatus.

### BACKGROUND

A route may be transmitted between network devices. For example, the route may be transmitted between the network devices by using a border gateway protocol (Border Gateway Protocol, BGP). The BGP is an external gateway protocol that can be used for selecting an optimal route and controlling route propagation between network domains, for example, autonomous systems (autonomous system, AS). When the BGP runs in a same network domain, the BGP is referred to as an internal border gateway protocol (Internal Border Gateway Protocol, IBGP). When the BGP runs between different network domains, the BGP is referred to as an external border gateway protocol (External Border Gateway Protocol, EBGP).

To reduce a quantity of routes to be maintained by a network device, specific routes may be aggregated to obtain an aggregated route. Correspondingly, when advertising a route, the network device may advertise only the aggregated route, without advertising the specific routes. However, in this manner, a traffic interruption may occur when traffic forwarding is guided based on the aggregated route.

Therefore, a solution is urgently needed to resolve the foregoing problem.

### SUMMARY

Embodiments of this application provide an information processing method and apparatus, to avoid a traffic interruption in a scenario in which a network device advertises only an aggregated route without advertising a specific route.

According to a first aspect, an embodiment of this application provides an information processing method. The method may be applied to a first network device. In an example, the first network device may determine that a first specific route sent by a second network device to the first network device is unavailable. After determining that the first specific route is unavailable, the first network device may generate a first message, where the first message includes a route prefix of the first specific route, next-hop information, and a route prefix of an aggregated route, and the aggregated route corresponds to the first specific route and a second specific route. In other words, a network segment corresponding to the aggregated route includes a network segment corresponding to the first specific route and a network segment corresponding to the second specific route. The second specific route is available. The next-hop information indicates the first network device. Specifically, the next-hop information indicates a port that is on the first network device and that is used for communicating with a third network device. After generating the first message, the first network device may send the first message to the third network device, so that the third network device determines that the first specific route corresponding to the aggregated route is unavailable. Correspondingly, the third network device may perform a corresponding processing measure, so that traffic that matches the first specific route is not forwarded to the first network device, avoiding a traffic interruption. It can be learned that, in this solution, the traffic interruption can be avoided in a scenario in which a network device advertises only an aggregated route without advertising a specific route.

In a possible implementation, before determining that the first specific route is unavailable, the first network device may further send the aggregated route to the third network device, and does not send the first specific route or the second specific route to the third network device, to reduce a quantity of routing entries to be maintained by the third network device.

In a possible implementation, when a fault occurs on the second network device or a fault occurs on a link between the second network device and the first network device, the first network device may determine that the first specific route is unavailable. That the first specific route is unavailable may be understood as that the first specific route cannot be used for guiding traffic forwarding. To be specific, when the fault occurs on the second network device or the fault occurs on the link between the second network device and the first network device, the first network device may determine that the first specific route cannot be used for guiding traffic forwarding. Further, the first network device may send the first message to the third network device, to avoid a traffic interruption.

In a possible implementation, that the first specific route is unavailable may be understood as that the first specific route cannot be used for guiding traffic forwarding. Specifically, it may be understood that traffic forwarding from the first network device to the route prefix of the first specific route fails to be guided based on the first specific route. In this scenario, if traffic whose destination address matches the route prefix of the first specific route is sent to the first network device, the traffic is interrupted at the first network device. Therefore, the first network device sends the first message to the third network device, so that the third network device determines that the first specific route corresponding to the aggregated route is unavailable. Correspondingly, the third network device may perform a corresponding processing measure, so that traffic that matches the first specific route is not forwarded to the first network device, avoiding a traffic interruption.

In a possible implementation, the first message may be a route advertisement message. In this case, the first network device may send the route prefix of the first specific route, the next-hop information, and the route prefix of the aggregated route to the third network device by using the route advertisement message, so that the third network device determines that the first specific route corresponding to the aggregated route is unavailable. Correspondingly, the third network device may perform a corresponding processing measure, so that traffic that matches the first specific route is not forwarded to the first network device, avoiding a traffic interruption.

In a possible implementation, the route advertisement message includes an extended community attribute, and the extended community attribute includes the route prefix of the aggregated route and the next-hop information. The third network device may parse the extended community attribute to obtain the route prefix of the aggregated route and the next-hop information. In a possible implementation, the extended community attribute is a BGP path attribute. The third network device may parse the BGP path attribute to obtain the route prefix of the aggregated route and the next-hop information.

In a possible implementation, a type code (type code) of the BGP path attribute indicates that the BGP path attribute is used for carrying the route prefix of the aggregated route and the next-hop information. In this way, the third network device may determine, based on a type code field of the BGP path attribute, that content carried in the BGP path attribute is the route prefix of the aggregated route and the next-hop information, and parse the field of the BGP path attribute to obtain the route prefix of the aggregated route and the next-hop information.

In a possible implementation, the first network device is a network device that generates the aggregated route. To be specific, when sensing that the first specific route is unavailable, the device that generates the aggregated route sends the first message to the third network device, so that the third network device determines that the first specific route corresponding to the aggregated route is unavailable. Correspondingly, the third network device may perform a corresponding processing measure, so that traffic that matches the first specific route is not forwarded to the first network device, avoiding a traffic interruption.

In a possible implementation, the first network device is a device that is at an aggregation layer and that is oriented to a core layer, the second network device is a device that is at the aggregation layer and that is oriented to an access layer or a device at the access layer, and the third network device is a device at the core layer. According to this solution, in a scenario in which the device that is at the aggregation layer and that is oriented to the core layer advertises the aggregated route to the device at the core layer, without advertising the first specific route and the second specific route that correspond to the aggregated route, even if the first specific route sent by the device that is at the aggregation layer and that is oriented to the access layer or the device at the access layer is unavailable, a traffic interruption does not occur.

According to a second aspect, an embodiment of this application provides an information processing method. The method may be applied to a third network device. In an example, the third network device may receive a first message sent by a first network device, where the first message includes a route prefix of a first specific route, next-hop information, and a route prefix of an aggregated route. The aggregated route corresponds to the first specific route and a second specific route. In other words, a network segment corresponding to the aggregated route includes a network segment corresponding to the first specific route and a network segment corresponding to the second specific route. The second specific route is available. The next-hop information indicates the first network device. Specifically, the next-hop information indicates a port that is on the first network device and that is used for communicating with the third network device. After receiving the first message, the third network device may locally search for a routing entry corresponding to the route prefix of the aggregated route, and if next-hop information included in a found first routing entry indicates a first port and a second port, where the second port is a port that is on a fourth network device and that is used for communicating with the third network device, generate a second routing entry corresponding to the route prefix of the first specific route, where next-hop information included in the second routing entry indicates the second port. In this way, when receiving traffic that matches the first specific route, the third network device may forward the traffic to the fourth network device based on the second routing entry, instead of forwarding the traffic to the first network device based on the aggregated route, to avoid a traffic interruption. It can be learned that, in this solution, the traffic interruption can be avoided in a scenario in which a network device advertises only an aggregated route without advertising a specific route.

In a possible implementation, if the next-hop information included in the first routing entry indicates only the first port, for example, the next-hop information in the first routing entry includes only a port address of the first port, it indicates that when forwarding traffic that matches the route prefix corresponding to the first specific route, the third network device can forward the traffic only through the first network device. In this case, once the third network device receives the traffic that matches the route prefix corresponding to the first specific route, a traffic interruption inevitably occurs. In this case, the third network device may generate a second message based on the first message, where the second message includes the route prefix of the first specific route, next-hop information indicating a third port, and the route prefix of the aggregated route, and the third port is a port that is on the third network device and that is used for communicating with a fifth network device; and the third network device sends the second message to the fifth network device. Correspondingly, after receiving the second message, the fifth network device may locally search for a routing entry corresponding to the route prefix of the aggregated route. If next-hop information included in a found third routing entry indicates the third port and a fourth port, where the fourth port is a port that is on a sixth network device and that is used for communicating with the fifth network device, it indicates that when forwarding the traffic that matches the route prefix corresponding to the first specific route, the fifth network device may forward the traffic through the third network device or the sixth network device. In this case, to avoid a traffic interruption caused by forwarding the traffic by the fifth network device to the third network device, the fifth network device may generate a fourth routing entry corresponding to the route prefix of the first specific route, where next-hop information included in the fourth routing entry indicates the fourth port. In this way, when receiving the traffic that matches the route prefix corresponding to the first specific route, the fifth network device may forward the traffic to the sixth network device based on the fourth routing entry, to avoid the traffic interruption.

In a possible implementation, that the first specific route is unavailable includes: Traffic forwarding from the first network device to the route prefix of the first specific route fails to be guided based on the first specific route.

In a possible implementation, the first message includes a route advertisement message.

In a possible implementation, the route advertisement message includes an extended community attribute, and the extended community attribute includes the route prefix of the aggregated route and the next-hop information.

In a possible implementation, the extended community attribute is a border gateway protocol BGP path attribute.

In a possible implementation, a type code type code of the BGP path attribute indicates that the BGP path attribute is used for carrying the route prefix of the aggregated route and the next-hop information.

In a possible implementation, the first network device is a network device that generates the aggregated route.

In a possible implementation, the first network device is a device that is at an aggregation layer and that is oriented to a core layer, the second network device is a device that is at the aggregation layer and that is oriented to an access layer or a device at the access layer, and the third network device is a device at the core layer.

According to a third aspect, an embodiment of this application provides an information processing apparatus, used in a first network device. The apparatus includes: a processing unit, configured to determine that a first specific route sent by a second network device to the first network device is unavailable, and generate a first message, where the first message includes a route prefix of the first specific route, next-hop information, and a route prefix of an aggregated route, the aggregated route corresponds to the first specific route and a second specific route, the second specific route is available, the next-hop information indicates a first port, and the first port is a port that is on the first network device and that is used for communicating with a third network device; and a sending unit, configured to send the first message to the third network device.

In a possible implementation, the sending unit is further configured to: before it is determined that the first specific route is unavailable, send the aggregated route to the third network device, and skip sending the first specific route and the second specific route to the third network device.

In a possible implementation, determining that the first specific route sent by the second network device to the first network device is unavailable includes: determining that a fault occurs on the second network device; or determining that a fault occurs on a link between the second network device and the first network device.

In a possible implementation, that the first specific route is unavailable includes: Traffic forwarding from the first network device to the route prefix of the first specific route fails to be guided based on the first specific route.

In a possible implementation, the first message includes a route advertisement message.

In a possible implementation, the route advertisement message includes an extended community attribute, and the extended community attribute includes the route prefix of the aggregated route and the next-hop information.

In a possible implementation, the extended community attribute is a border gateway protocol BGP path attribute.

In a possible implementation, a type code type code of the BGP path attribute indicates that the BGP path attribute is used for carrying the route prefix of the aggregated route and the next-hop information.

In a possible implementation, the first network device is a network device that generates the aggregated route.

In a possible implementation, the first network device is a device that is at an aggregation layer and that is oriented to a core layer, the second network device is a device that is at the aggregation layer and that is oriented to an access layer or a device at the access layer, and the third network device is a device at the core layer.

According to a fourth aspect, an embodiment of this application provides an information processing apparatus, used in a third network device. The apparatus includes: a receiving unit, configured to receive a first message sent by a first network device, where the first message includes a route prefix of a first specific route, next-hop information, and a route prefix of an aggregated route, the aggregated route corresponds to the first specific route and a second specific route, the first specific route is unavailable, the first specific route is a route sent by a second network device to the first network device, the second specific route is available, the next-hop information indicates a first port, and the first port is a port that is on the first network device and that is used for communicating with the third network device; and a processing unit, configured to locally search for a routing entry corresponding to the route prefix of the aggregated route, and if next-hop information included in a found first routing entry indicates the first port and a second port, where the second port is a port that is on a fourth network device and that is used for communicating with the third network device, generate a second routing entry corresponding to the route prefix of the first specific route, where next-hop information included in the second routing entry indicates the second port.

In a possible implementation, the processing unit is further configured to: if the next-hop information included in the first routing entry indicates only the first port, generate a second message based on the first message, where the second message includes the route prefix of the first specific route, next-hop information indicating a third port, and the route prefix of the aggregated route, and the third port is a port that is on the third network device and that is used for communicating with a fifth network device. The apparatus further includes a sending unit, configured to advertise the second message to the fifth network device.

In a possible implementation, that the first specific route is unavailable includes: Traffic forwarding from the first network device to the route prefix of the first specific route fails to be guided based on the first specific route.

In a possible implementation, the first message includes a route advertisement message.

In a possible implementation, the route advertisement message includes an extended community attribute, and the extended community attribute includes the route prefix of the aggregated route and the next-hop information.

In a possible implementation, the extended community attribute is a border gateway protocol BGP path attribute.

In a possible implementation, a type code type code of the BGP path attribute indicates that the BGP path attribute is used for carrying the route prefix of the aggregated route and the next-hop information.

In a possible implementation, the first network device is a network device that generates the aggregated route.

In a possible implementation, the first network device is a device that is at an aggregation layer and that is oriented to a core layer, the second network device is a device that is at the aggregation layer and that is oriented to an access layer or a device at the access layer, and the third network device is a device at the core layer.

According to a fifth aspect, an embodiment of this application provides a device. The device includes a processor and a memory. The memory is configured to store instructions or a computer program. The processor is configured to: execute the instructions or the computer program in the memory, and perform the method according to any one of the first aspect or the implementations of the first aspect, or perform the method according to any one of the second aspect or the implementations of the second aspect.

According to a sixth aspect, an embodiment of this application provides a computer-readable storage medium, including instructions or a computer program. When the instructions or the computer program is run on a computer, the computer is enabled to perform the method according to any one of the first aspect or the implementations of the first aspect, or perform the method according to any one of the second aspect or the implementations of the second aspect.

According to a seventh aspect, an embodiment of this application provides a computer program product, including instructions or a computer program. When the instructions or the computer program is run on a computer, the computer is enabled to perform the method according to any one of the first aspect or the implementations of the first aspect, or perform the method according to any one of the second aspect or the implementations of the second aspect.

According to an eighth aspect, an embodiment of this application provides a communication system. The communication system includes a first network device that performs the method according to any one of the first aspect or the implementations of the first aspect and a third network device that performs the method according to any one of the second aspect or the implementations of the second aspect.

### BRIEF DESCRIPTION OF DRAWINGS

To describe the technical solutions in embodiments of this application or conventional technologies more clearly, the following briefly describes the accompanying drawings for describing embodiments or the conventional technologies. It is clear that, the accompanying drawings in the following descriptions show merely some embodiments in this application, and a person of ordinary skill in the art may still derive other drawings from these accompanying drawings without creative efforts.
FIG. 1 is a diagram of a network architecture according to an embodiment of this application;
FIG. 2a is a diagram of routing entries of network devices according to an embodiment of this application;
FIG. 2b is another diagram of routing entries of network devices according to an embodiment of this application;
FIG. 3 is a diagram of signaling exchange in an information processing method according to an embodiment of this application;
FIG. 4 is a diagram of a structure of a route advertisement message according to an embodiment of this application;
FIG. 5a is a diagram of a fault scenario according to an embodiment of this application;
FIG. 5b is a diagram of another fault scenario according to an embodiment of this application;
FIG. 6 is a diagram of a structure of an information processing apparatus according to an embodiment of this application;
FIG. 7 is a diagram of a structure of another information processing apparatus according to an embodiment of this application; and
FIG. 8 is a diagram of a structure of a device according to an embodiment of this application.

### DESCRIPTION OF EMBODIMENTS

Embodiments of this application provide an information advertisement method, and an information processing method and apparatus, to avoid a traffic interruption in a scenario in which a network device advertises only an aggregated route without advertising a specific route.

For ease of understanding, a possible application scenario of embodiments of this application is first described.

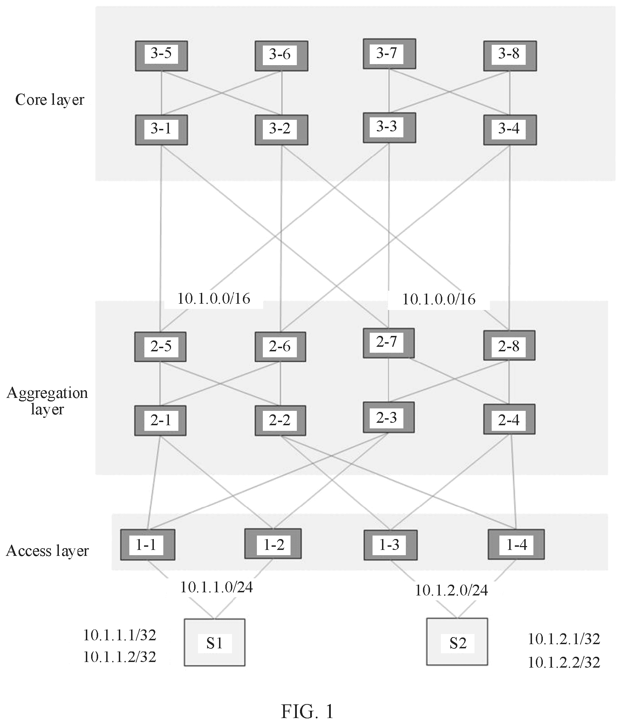

FIG. 1 is a diagram of a network architecture according to an embodiment of this application.

The network structure shown in FIG. 1 may be, but is not limited to, a network architecture of a data center. The network architecture shown in FIG. 1 includes an access layer, an aggregation layer, and a core layer. The access layer includes network devices 1-1, 1-2, 1-3, and 1-4. The aggregation layer includes network devices 2-1, 2-2, 2-3, 2-4, 2-5, 2-6, 2-7, and 2-8. The core layer includes network devices 3-1, 3-2, 3-3, 3-4, 3-5, 3-6, 3-7, and 3-8.

For a connection relationship between the network devices, refer to FIG. 1. Details are not described herein one by one.

A server S1 is dual-homed to the network devices 1-1 and 1-2, and a server S2 is dual-homed to the network devices 1-3 and 1-4. S1 corresponds to two host routes, and route prefixes of the two host routes are respectively 10.1.1.1/32 and 10.1.1.2/32. S2 corresponds to two host routes, and route prefixes of the two host routes are respectively 10.1.2.1/32 and 10.1.2.2/32.

Both the network device 1-1 and the network device 1-2 correspond to network segment routes, and the host routes corresponding to S1 fall within network segments included in the network segment routes corresponding to the network device 1-1 and the network device 1-2. In an example, route prefixes of the network segment routes corresponding to the network device 1-1 and the network device 1-2 are both 10.1.1.0/24. A route prefix of a host route in a network segment corresponding to 10.1.1.0/24 may be 10.1.1.*/32, where a value of "*" may range from 1 to 254.

Both the network device 1-3 and the network device 1-4 correspond to network segment routes, and the host routes corresponding to S2 fall within network segments included in the network segment routes corresponding to the network device 1-3 and the network device 1-4. In an example, route prefixes of the network segment routes corresponding to the network device 1-3 and the network device 1-4 are both 10.1.2.0/24. A route prefix of a host route in a network segment corresponding to 10.1.2.0/24 may be 10.1.2.X/32, where a value of "X" may range from 1 to 254.

S1 may advertise the host routes of S1 to the network device 1-1 and the network device 1-2, and S2 may advertise the host routes of S2 to the network device 1-3 and the network device 1-4.

Correspondingly, the device 1-1 at the access layer may advertise a network segment route of the device 1-1 and the route prefixes of the host routes of S1 to the devices 2-1 and 2-3 at the aggregation layer; the device 1-2 at the access layer may advertise a network segment route of the device 1-2 and the route prefixes of the host routes of S1 to the devices 2-1 and 2-3 at the aggregation layer; the device 1-3 at the access layer may advertise a network segment route of the device 1-3 and the route prefixes of the host routes of S1 to the devices 2-2 and 2-4 at the aggregation layer; and the device 1-4 at the access layer may advertise a network segment route of the device 1-4 and the route prefixes of the host routes of S1 to the devices 2-2 and 2-4 at the aggregation layer.

Route advertisement may alternatively be performed between the devices at the aggregation layer. For example, the device 2-1 at the aggregation layer may advertise, to the device 2-6 at the aggregation layer, a route prefix received by the device 2-1 at the aggregation layer from a device at the access layer; the device 2-2 at the aggregation layer may advertise, to the device 2-6 at the aggregation layer, a route prefix received by the device 2-2 at the aggregation layer from a device at the access layer; the device 2-6 at the aggregation layer may advertise, to the device 2-1 at the aggregation layer, a route prefix received by the device 2-6 at the aggregation layer from the device 2-2 at the aggregation layer. Details are not described herein one by one.

After the route advertisement at the aggregation layer, all the devices that are at the aggregation layer and that are oriented to the core layer can learn the route prefixes (10.1.1.1/32 and 10.1.1.2/32) of the host routes of S1, the route prefixes (10.1.2.1/32 and 10.1.2.2/32) of the host routes of S2, the route prefixes (10.1.1.0/24) of the network segment routes of the network device 1-1 and the network device 1-2, and the route prefixes (10.1.2.0/24) of the network segment routes of the network device 1-3 and the network device 1-4. The device that is at the aggregation layer and that is oriented to the core layer is a network device that is at the aggregation layer and that is configured to communicate with the core layer. In FIG. 1, the network devices 2-5, 2-6, 2-7, and 2-8 are devices that are at the aggregation layer and that are oriented to the core layer.

The device that is at the aggregation layer and that is oriented to the core layer may advertise a route to a device at the core layer. To reduce a route scale, when advertising a route to a device at the core layer, the device that is at the aggregation layer and that is oriented to the core layer may aggregate specific routes to obtain an aggregated route, and advertise the aggregated route to the network device at the core layer, instead of advertising specific routes in a network segment of the aggregated route. For example, in the scenario shown in FIG. 1, the network device 2-5 may aggregate prefix route prefixes 10.1.1.1/32, 10.1.1.2/32, 10.1.2.1/32, 10.1.2.2/32, 10.1.1.0/24, and 10.1.2.0/24 to obtain an aggregated route with a route prefix 10.1.0.0/16, and advertise, to the devices 3-1 and 3-3 at the core layer, the aggregated route obtained through aggregation by the network device 2-5. Similarly, the network device 2-6 may aggregate prefix route prefixes 10.1.1.1/32, 10.1.1.2/32, 10.1.2.1/32, 10.1.2.2/32, 10.1.1.0/24, and 10.1.2.0/24, to obtain an aggregated route with a route prefix 10.1.0.0/16, and advertise, to the devices 3-2 and 3-4 at the core layer, the aggregated route obtained through aggregation by the network device 2-6. The network device 2-7 may aggregate prefix route prefixes 10.1.1.1/32, 10.1.1.2/32, 10.1.2.1/32, 10.1.2.2/32, 10.1.1.0/24, and 10.1.2.0/24, to obtain an aggregated route with a route prefix 10.1.0.0/16, and advertise, to the devices 3-1 and 3-3 at the core layer, the aggregated route obtained through aggregation by the network device 2-7. The network device 2-8 may aggregate prefix route prefixes 10.1.1.1/32, 10.1.1.2/32, 10.1.2.1/32, 10.1.2.2/32, 10.1.1.0/24, and 10.1.2.0/24, to obtain an aggregated route with a route prefix 10.1.0.0/16, and advertise, to the devices 3-2 and 3-4 at the core layer, the aggregated route obtained through aggregation by the network device 2-8.

Route advertisement may alternatively be performed between core devices. For example, the device 3-1 at the core layer may advertise, to the devices 3-6 and 3-5 at the core layer, a route prefix 10.1.0.0/16 received by the device 3-1 at the core layer from a device at the aggregation layer; the device 3-2 at the core layer may advertise, to the devices 3-6 and 3-5 at the core layer, a route prefix 10.1.0.0/16 received by the device 3-2 at the core layer from a device at the aggregation layer; the device 3-3 at the core layer may advertise, to the devices 3-7 and 3-8 at the core layer, a route prefix 10.1.0.0/16 received by the device 3-3 at the core layer from a device at the aggregation layer; and the device 3-4 at the core layer may advertise, to the devices 3-7 and 3-8 at the core layer, a route prefix 10.1.0.0/16 received by the device 3-4 at the core layer from a device at the aggregation layer.

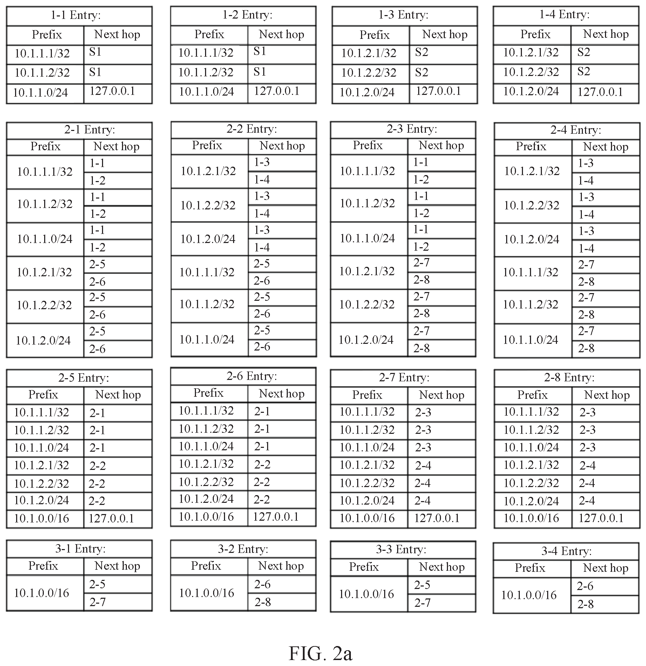

In this case, a routing entry stored in each network device may be shown in FIG. 2a. FIG. 2a is a diagram of routing entries of network devices according to an embodiment of this application. In FIG. 2a, a next hop corresponding to a route prefix is 127.0.0.1, indicating that the route prefix is a route prefix generated by a network device that stores the entry. For example, in an entry corresponding to the network device 1-1, a next hop corresponding to the route prefix 10.1.1.0/24 is 127.0.0.1, indicating that the route prefix 10.1.1.0/24 is a route prefix generated by the network device 1-1. In FIG. 2a, for a network device a, next-hop information in a routing entry stored in the network device a is a network device b, and it may be understood that the next-hop information is a port used by the network device b for communicating with the network device a. For example, in an entry corresponding to the network device 1-1, a next hop corresponding to the route prefix 10.1.1.1/32 is S1, and it may be understood that the next hop corresponding to the route prefix 10.1.1.1/32 is a port used by S1 for communicating with 1-1. The port mentioned in embodiments of this application may be a physical port, or may be a logical port. This is not specifically limited in embodiments of this application.

In an example, if a fault occurs at the aggregation layer, when the device at the core layer guides traffic forwarding based on a route prefix of an aggregated route, a traffic interruption occurs. The following provides descriptions by using a fault on the device 2-1 at the aggregation layer as an example.

When sensing that a fault occurs on a link between the network device 2-5 and the network device 2-1, the network device 2-5 may delete the route prefix 10.1.1.0/24 of the network segment route and the route prefixes 10.1.1.1/32 and 10.1.1.2/32 of the host routes received from the network device 2-1, or the network device 2-5 may invalidate the route prefix 10.1.1.0/24 of the network segment route and the route prefixes 10.1.1.1/32 and 10.1.1.2/32 of the host routes received from the network device 2-1.

Correspondingly, the network device 2-5 may send a route update message or a route withdrawal message to the network device 2-2, so that the network device 2-2 deletes the route prefix 10.1.1.0/24 of the network segment route and the route prefixes 10.1.1.1/32 and 10.1.1.2/32 of the host routes received from the network device 2-5, or the network device 2-2 invalidates the route prefix 10.1.1.0/24 of the network segment route and the route prefixes 10.1.1.1/32 and 10.1.1.2/32 of the host routes received from the network device 2-5.

Similarly, when sensing that a fault occurs on a link between the network device 2-6 and the network device 2-1, the network device 2-6 may delete the route prefix 10.1.1.0/24 of the network segment route and the route prefixes 10.1.1.1/32 and 10.1.1.2/32 of host routes received from the network device 2-1, or the network device 2-6 may invalidate the route prefix 10.1.1.0/24 of the network segment route and the route prefixes 10.1.1.1/32 and 10.1.1.2/32 of the host routes received from the network device 2-1.

Correspondingly, the network device 2-6 may send a route update message or a route withdrawal message to the network device 2-2, so that the network device 2-2 deletes the route prefix 10.1.1.0/24 of the network segment route and the route prefixes 10.1.1.1/32 and 10.1.1.2/32 of the host routes received from the network device 2-6, or the network device 2-2 invalidates the route prefix 10.1.1.0/24 of the network segment route and the route prefixes 10.1.1.1/32 and 10.1.1.2/32 of the host routes received from the network device 2-6.

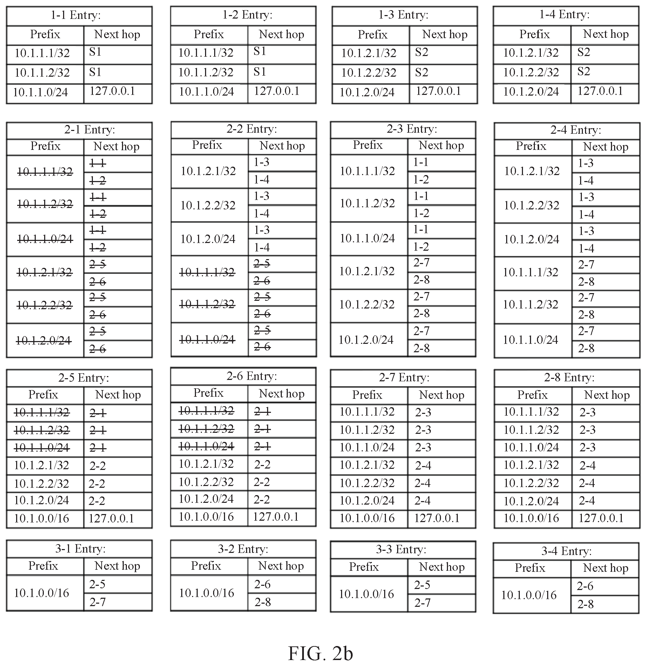

In this case, a BGP routing entry of each network device is shown in FIG. 2b. FIG. 2b is another diagram of routing entries of network devices according to an embodiment of this application. It can be learned from FIG. 2a and FIG. 2b that the fault occurs on the network device 2-1, BGP routing entries corresponding to the network devices 2-1, 2-2, 2-5, and 2-6 change, and BGP routing entries of other network devices remain unchanged. In FIG. 2b, a strikethrough in a routing entry may indicate that the routing entry is deleted, or may indicate that the routing entry is invalidated (that is, in an invalid state).

It can be learned from the foregoing descriptions that, when the fault occurs on the network device 2-1, BGP routing entries stored by the devices 3-1, 3-2, 3-3, 3-4, 3-5, 3-6, 3-7, and 3-8 at the core layer remain unchanged. Therefore, when receiving traffic that matches the route prefix 10.1.1.0/24, 10.1.1.1/32, or 10.1.1.2/32, the devices 3-1, 3-2, 3-3, and 3-4 that are at the core layer and that are oriented to the aggregation layer still guide traffic forwarding based on an entry corresponding to an aggregated route. Consequently, the traffic is forwarded along a practically unavailable path, leading to a service interruption. The network device 3-1 is used as an example. When receiving the traffic that matches the route prefix 10.1.1.0/24, 10.1.1.1/32, or 10.1.1.2/32, the network device 3-1 may forward the traffic to the network device 2-5 based on the BGP routing entry of the network device 3-1. After the traffic is forwarded to the network device 2-5, the network device 2-5 cannot obtain, through matching, a routing entry corresponding to the traffic, and discards the traffic, leading to a service interruption.

To resolve the foregoing problem, embodiments of this application provide an information processing method and apparatus. The following describes, with reference to the accompanying drawings, the information processing method and apparatus provided in embodiments of this application.

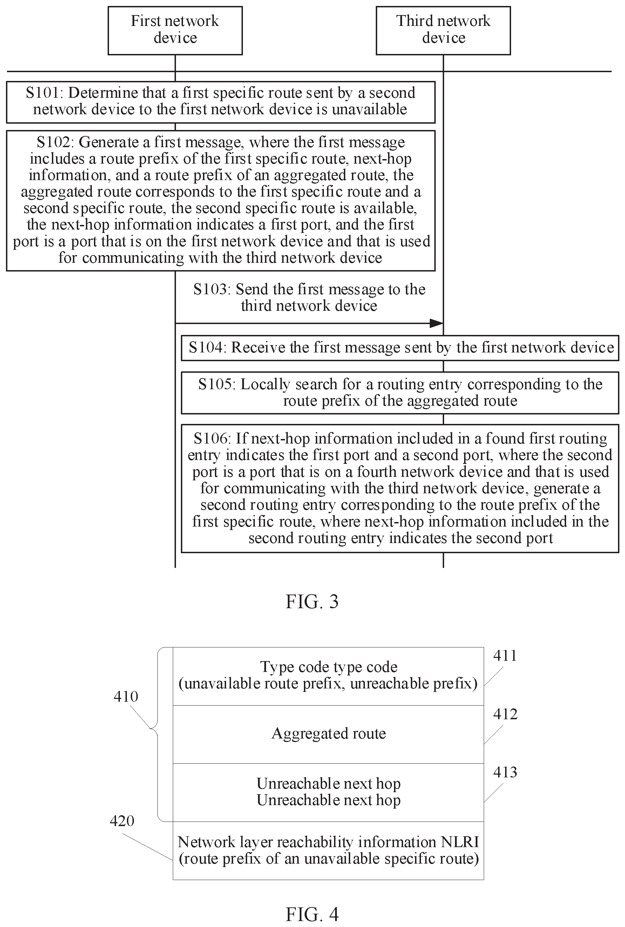

FIG. 3 is a diagram of signaling exchange in an information processing method according to an embodiment of this application. The method shown in FIG. 3 may include the following S101 to S106.

Before S101 to S106 are described, a first network device, a second network device, and a third network device in S101 to S106 are described. The first network device, the second network device, and the third network device are not specifically limited in this embodiment of this application. During route transmission, a route transmission path may be: the second network device → the first network device → the third network device. In other words, the second network device may transmit a route to the first network device, and the first network device may further transmit a route to the third network device.

When the method shown in FIG. 3 is applied to the network scenario shown in FIG. 1, in an example, the second network device may be a device at an access layer, the first network device is a device that is at an aggregation layer and that is oriented to a core layer, and the third network device is a device at the core layer, for example, a device that is at the core layer and that is oriented to the aggregation layer. The device at the access layer may advertise a route to the device that is at the aggregation layer and that is oriented to the core layer through a device that is at the aggregation layer and that is oriented to the access layer. For example, the second network device is 1-1, the first network device is 2-5, the third network device is 3-1 or 3-3, and 1-1 may advertise a route to 2-5 through 2-1. For another example, the second network device is 1-1, the first network device is 2-6, the third network device is 3-2 or 3-4, and 1-1 may advertise a route to 2-6 through 2-1.

When the method shown in FIG. 3 is applied to the network scenario shown in FIG. 1, in another example, the second network device may be a device that is at the aggregation layer and that is oriented to the access layer, the first network device is a device that is at the aggregation layer and that is oriented to the core layer, and the third network device is a device at the core layer, for example, a device that is at the core layer and that is oriented to the aggregation layer. For example, the second network device is 2-1, the first network device is 2-5, and the third network device is 3-1 or 3-3. For another example, the second network device is 2-1, the first network device is 2-6, and the third network device is 3-2 or 3-4.

In an example, the first network device may be a device that generates an aggregated route. When the method shown in FIG. 3 is applied to the network scenario shown in FIG. 1, the first network device is a device that aggregates a route prefix of a network segment route of a network device at the access layer and a route prefix of a host route of a server.

S101: The first network device determines that a first specific route sent by the second network device to the first network device is unavailable.

The first specific route is a route sent by the second network device to the first network device. Therefore, in an example, when a fault occurs on the second network device or a fault occurs on a link between the second network device and the first network device, the first network device may determine that the first specific route is unavailable. That the first specific route is unavailable may be understood as that the first specific route cannot be used for guiding traffic forwarding. Specifically, it may be understood that traffic forwarding from the first network device to a route prefix of the first specific route cannot be guided based on the first specific route.

In an example, the first network device may determine that the fault occurs on the second network device when a keepalive (keepalive) message between the first network device and the second network device is interrupted. In another example, the first network device may determine that the fault occurs on the link between the first network device and the second network device when determining that a fault occurs on a port that is on the first network device and that is used for communicating with the second network device.

In this embodiment of this application, the first specific route may include a plurality of routes, and correspondingly, the route prefix of the first specific route may include a plurality of route prefixes. For example, when the first network device is 2-5, and the second network device is 2-1, the route prefixes of the first specific route include: 10.1.1.0/24, 10.1.1.1/32, and 10.1.1.2/32.

S102: The first network device generates a first message, where the first message includes the route prefix of the first specific route, next-hop information, and a route prefix of an aggregated route, the aggregated route corresponds to the first specific route and a second specific route, the second specific route is available, the next-hop information indicates a first port, and the first port is a port that is on the first network device and that is used for communicating with a third network device.

In this embodiment of this application, that the aggregated route corresponds to the first specific route and the second specific route may be understood as that a network segment corresponding to the route prefix of the aggregated route includes a network segment corresponding to the route prefix of the first specific route and a network segment corresponding to a route prefix of the second specific route. Alternatively, the aggregated route may be obtained by aggregating the first specific route and the second specific route.

Similar to the first specific route, the second specific route may also include a plurality of routes, and correspondingly, the route prefix of the second specific route may include a plurality of route prefixes. For example, when the first network device is 2-5, and the second network device is 2-1, the route prefixes of the second specific route include: 10.1.2.0/24, 10.1.2.1/32, and 10.1.2.2/32.

In this embodiment of this application, if the first specific route corresponding to the aggregated route is unavailable and the second specific route is available, an entry of the aggregated route stored in the third network device remains unchanged even when the first specific route is unavailable. Therefore, when the third network device guides traffic forwarding based on the entry corresponding to the aggregated route, a traffic interruption occurs. To resolve this problem, in this embodiment of this application, the first network device may generate the first message. The first message includes the route prefix of the first specific route, the next-hop information, and the route prefix of the aggregated route, and the next-hop information indicates the first network device. Specifically, the next-hop information indicates the first port that is on the first network device and that is used for communicating with the third network device. The next-hop information may be, for example, a port address of the first port.

In an example, the first message may be a first Ethernet packet, and the first Ethernet packet includes the route prefix of the first specific route, the next-hop information, and the route prefix of the aggregated route. In another example, the first message may be a route advertisement message, that is, a BGP update (update) message.

In an example, the route advertisement message may include an extended community attribute, and the extended community attribute includes the route prefix of the aggregated route and the next-hop information. In addition, the route advertisement message further includes network layer reachability information (network layer reachability information, NLRI), and the NLRI includes the route prefix of the first specific route.

The extended community attribute is not specifically limited in this embodiment of this application. The extended community attribute may be any BGP extended community attribute. For example, the extended community attribute may be a BGP path attribute. That is, the BGP path attribute may be used for carrying the route prefix of the aggregated route and the next-hop information. In this case, in an example, a type code of the BGP path attribute indicates that the BGP path attribute is used for carrying the route prefix of the aggregated route and the next-hop information. In this way, a network device that receives the first message may determine, based on a type code field of the BGP path attribute, that content carried in the BGP path attribute is the route prefix of the aggregated route and the next-hop information. In another example, the type code further indicates that the NLRI in the route advertisement message is used for carrying a route prefix of an unavailable specific route (that is, the route prefix of the first specific route).

The route advertisement message may include a structure shown in FIG. 4. FIG. 4 is a diagram of a structure of a route advertisement message according to an embodiment of this application. As shown in FIG. 4, the route advertisement message includes a BGP path attribute 410 and NLRI 420, and the BGP path attribute 410 includes a type code field 411, an aggregated route field 412, and an unreachable next-hop field 413.

The aggregated route field 412 and the unreachable next-hop field 413 are value fields of the BGP path attribute 410.

The aggregated route field 412 is used for carrying the route prefix of the aggregated route.

The unreachable next-hop field 413 is used for carrying the foregoing next-hop information.

The type code field 411 indicates a route attribute, and an attribute type of the route attribute is an unavailable route prefix. In a specific example, the type code field 411 indicates that the aggregated route field 412 carries the route prefix of the aggregated route, the unreachable next-hop field 413 carries the foregoing next-hop information, and the NLRI field 420 carries the route prefix of the unavailable specific route.

The NLRI 420 carries the route prefix of the first specific route.

It should be noted that FIG. 4 is intended for understanding some fields of the route advertisement message shown in this solution. The route advertisement message may further include another field. This is not specifically limited in this embodiment of this application.

In another example, the route prefix of the first specific route, the next-hop information, and the route prefix of the aggregated route may all be carried in the NLRI in the route advertisement message. For example, the NLRI includes a first sub-type length value (sub-type length value, sub-TLV) and a second sub-TLV, the first sub-TLV is used for carrying the route prefix of the aggregated route, and the second sub-TLV is used for carrying the next-hop information.

S103: The first network device sends the first message to the third network device.

S104: The third network device receives the first message sent by the first network device.

S105: The third network device locally searches for a routing entry corresponding to the route prefix of the aggregated route.

After generating the first message, the first network device may send the first message to the third network device. Correspondingly, the third network device may receive the first message advertised by the first network device. After receiving the first message, the third network device may determine, based on the first message, that the first specific route is unavailable, that is, determine that traffic forwarding from the first network device to the route prefix of the first specific route fails to be guided based on the first specific route. Further, the third network device may locally search for the routing entry corresponding to the route prefix of the aggregated route. In an example, the third network device may search for a locally stored routing entry by using the route prefix of the aggregated route as an index.

S106: If next-hop information included in a found first routing entry indicates the first port and a second port, where the second port is a port that is on a fourth network device and that is used for communicating with the third network device, the third network device generates a second routing entry corresponding to the route prefix of the first specific route, where next-hop information included in the second routing entry indicates the second port.

After finding the first routing entry corresponding to the route prefix of the aggregated route, the third network device may determine a corresponding processing measure based on the next-hop information in the first routing entry.

In an example, if the next-hop information included in the first routing entry indicates the first port and the second port, for example, the next-hop information in the first routing entry includes a port address of the first port and a port address of the second port, where the second port is a port that is on the fourth network device and that is used for communicating with the third network device, it indicates that when forwarding traffic that matches the route prefix corresponding to the first specific route, the third network device may forward the traffic through the first network device or the fourth network device. In this case, to avoid a traffic interruption caused by forwarding the traffic by the third network device to the first network device, the third network device may generate the second routing entry corresponding to the route prefix of the first specific route, where the next-hop information included in the second routing entry indicates the second port. In this way, when receiving the traffic that matches the route prefix corresponding to the first specific route, the third network device may forward the traffic to the fourth network device based on the second routing entry, to avoid the traffic interruption.

For example, when the first network device is 2-5, the second network device is 2-1, the third network device is 3-1, the route prefixes of the first specific route include 10.1.1.0/24, 10.1.1.1/32, and 10.1.1.2/32, and the fourth network device is 2-7, the next-hop information in the second routing entry indicates a port that is on the network device 2-7 and that is used for communicating with the network device 3-1. The second routing entry is shown in the following Table 1.

**Table 1**

| Route prefix | Next hop |
|---|---|
| 10.1.1.0/24 | 2-7 |
| 10.1.1.1/32 | 2-7 |
| 10.1.1.2/32 | 2-7 |

In another example, if the next-hop information included in the first routing entry indicates only the first port, for example, the next-hop information in the first routing entry includes only a port address of the first port, it indicates that when forwarding traffic that matches the route prefix corresponding to the first specific route, the third network device can forward the traffic only through the first network device. In this case, once the third network device receives the traffic that matches the route prefix corresponding to the first specific route, a traffic interruption inevitably occurs. In this case, the third network device may generate a second message based on the first message, where the second message includes the route prefix of the first specific route, next-hop information indicating a third port, and the route prefix of the aggregated route, and the third port is a port that is on the third network device and that is used for communicating with a fifth network device; and the third network device sends the second message to the fifth network device. For example, the first network device is 2-5, the second network device is 2-1, the third network device is 3-1, and the fifth network device is 3-5 or 3-6.

A message structure of the second message is the same as that of the first message. For related content, refer to the foregoing descriptions of the first message. Details are not described herein again.

Correspondingly, after receiving the second message, the fifth network device may locally search for a routing entry corresponding to the route prefix of the aggregated route. If next-hop information included in a found third routing entry indicates the third port and a fourth port, where the fourth port is a port that is on a sixth network device and that is used for communicating with the fifth network device, it indicates that when forwarding the traffic that matches the route prefix corresponding to the first specific route, the fifth network device may forward the traffic through the third network device or the sixth network device. In this case, to avoid a traffic interruption caused by forwarding the traffic by the fifth network device to the third network device, the fifth network device may generate a fourth routing entry corresponding to the route prefix of the first specific route, where next-hop information included in the fourth routing entry indicates the fourth port. In this way, when receiving the traffic that matches the route prefix corresponding to the first specific route, the fifth network device may forward the traffic to the sixth network device based on the fourth routing entry, to avoid the traffic interruption.

For example, when the first network device is 2-5, the second network device is 2-1, the third network device is 3-1, the fifth network device is 3-5, the sixth network device is 3-2, and the route prefixes of the first specific route include 10.1.1.0/24, 10.1.1.1/32, and 10.1.1.2/3, the next-hop information in the fourth routing entry indicates a port that is on the network device 3-2 and that is used for communicating with the network device 3-5. The second routing entry is shown in the following Table 1.

**Table 2**

| Route prefix | Next hop |
|---|---|
| 10.1.1.0/24 | 3-2 |
| 10.1.1.1/32 | 3-2 |
| 10.1.1.2/32 | 3-2 |

In an example, when a network fault occurs, operation and maintenance personnel perform troubleshooting and perform a corresponding processing measure to recover from the fault. Therefore, to reduce a quantity of routing entries to be maintained by a network device, the third network device may further set a specific life cycle for the second routing entry, and delete the second routing entry when the life cycle ends. A specific value of the life cycle is not specifically limited in this embodiment of this application, and the life cycle may be determined, for example, based on fault recovery time.

In an example, before performing S101, the first network device may further send the aggregated route to the third network device, and does not send the first specific route or the second specific route to the third network device, to reduce the quantity of routing entries to be maintained by the third network device.

It can be learned from the foregoing descriptions that, according to the solution in this embodiment of this application, a traffic interruption can be avoided in a scenario in which the first network device advertises the aggregated route only to the third network device without advertising a specific route corresponding to the aggregated route.

The foregoing describes the information processing method provided in embodiments of this application. The following describes, with reference to the network architecture shown in FIG. 1, specific application manners of the information processing method provided in this application in different fault scenarios.

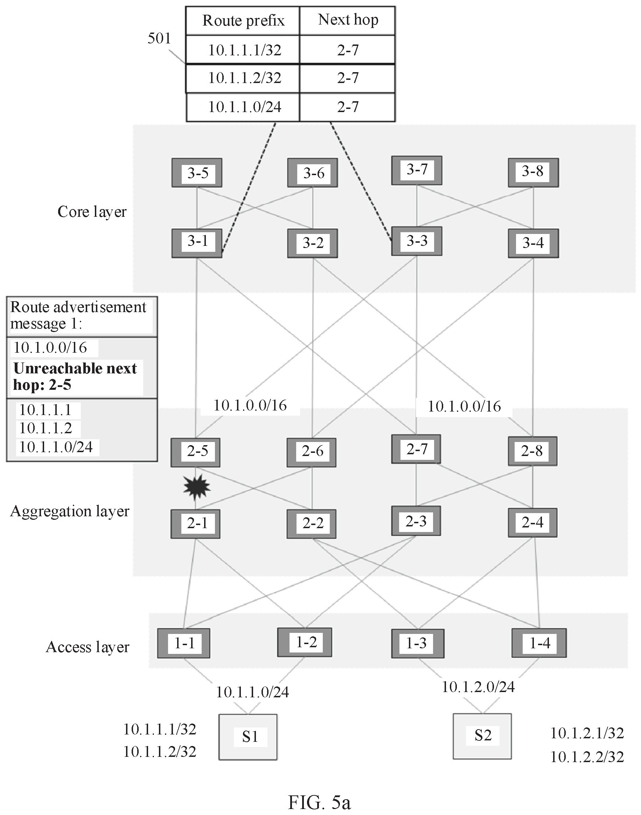

FIG. 5a is a diagram of a fault scenario according to an embodiment of this application. As shown in FIG. 5a, when a fault occurs on a link between a network device 2-5 and a network device 2-1, the network device 2-5 may generate a route advertisement message 1 and send the route advertisement message 1 to network devices 3-1 and 3-3. Correspondingly, the network devices 3-1 and 3-3 may generate, based on the route advertisement message 1, a routing entry 501 corresponding to a first specific route, while retaining an original routing entry.

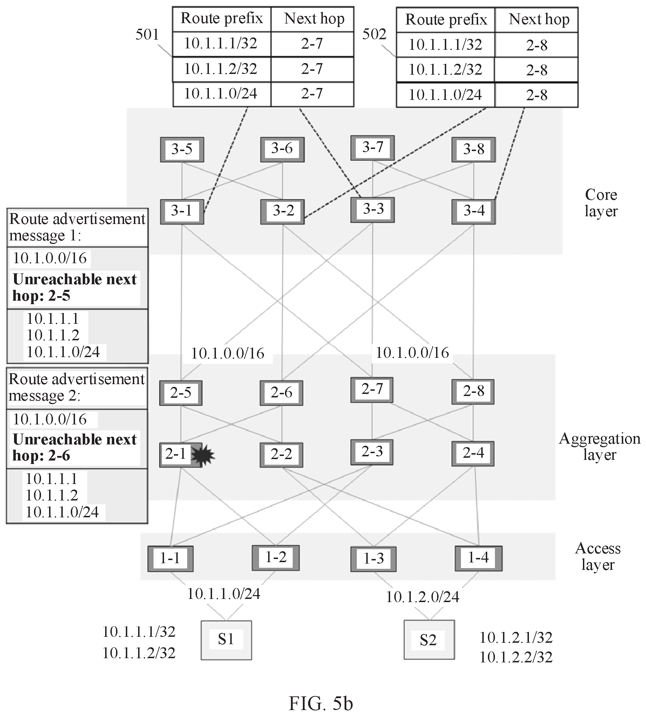

FIG. 5b is a diagram of another fault scenario according to an embodiment of this application. As shown in FIG. 5b, when a fault occurs on a network device 2-1, leading to faults on both a link between a network device 2-5 and the network device 2-1 and a link between a network device 2-6 and the network device 2-1, the network device 2-5 may generate a route advertisement message 1 and send the route advertisement message 1 to network devices 3-1 and 3-3. Correspondingly, the network devices 3-1 and 3-3 may generate a routing entry 501 based on the route advertisement message 1, while retaining an original routing entry. Similarly, 2-6 may generate a route advertisement message 2 and send the route advertisement message 2 to network devices 3-2 and 3-4. Correspondingly, the network devices 3-2 and 3-4 may generate a routing entry 502 based on the route advertisement message 2, while retaining an original routing entry.

For FIG. 5a and FIG. 5b, specific structures of the route advertisement messages (for example, the route advertisement message 1 and the route advertisement message 2) may be understood with reference to FIG. 4. FIG. 5a and FIG. 5b merely provide simple examples, and do not constitute a limitation on embodiments of this application.

Based on the information processing method provided in the foregoing method embodiments, embodiments of this application further provide corresponding apparatuses. With reference to the accompanying drawings, the following describes an information processing apparatus provided in embodiments of this application.

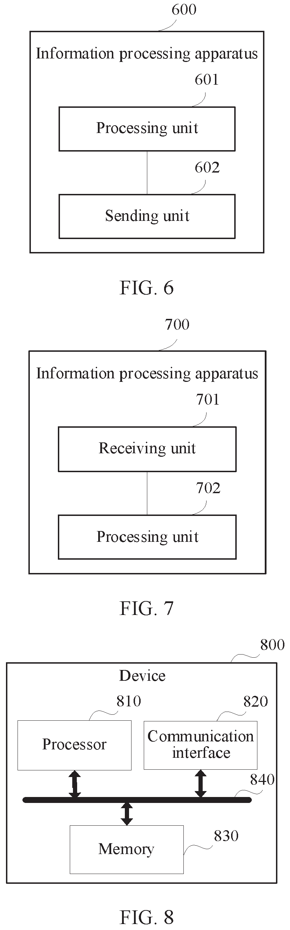

FIG. 6 is a diagram of a structure of an information processing apparatus according to an embodiment of this application. The information processing apparatus 600 shown in FIG. 6 may be used in a first network device, and is configured to perform the steps that are performed by the first network device and that are provided in the foregoing method embodiments, for example, perform S101 to S103.

The information processing apparatus 600 shown in FIG. 6 includes a processing unit 601 and a sending unit 602.

The processing unit 601 is configured to determine that a first specific route sent by a second network device to the first network device is unavailable, and generate a first message, where the first message includes a route prefix of the first specific route, next-hop information, and a route prefix of an aggregated route, the aggregated route corresponds to the first specific route and a second specific route, the second specific route is available, the next-hop information indicates a first port, and the first port is a port that is on the first network device and that is used for communicating with a third network device.

The sending unit 602 is configured to send the first message to the third network device.

In a possible implementation, the sending unit 602 is further configured to: before it is determined that the first specific route is unavailable, send the aggregated route to the third network device, and skip sending the first specific route and the second specific route to the third network device.

In a possible implementation, determining that the first specific route sent by the second network device to the first network device is unavailable includes: determining that a fault occurs on the second network device; or determining that a fault occurs on a link between the second network device and the first network device.

In a possible implementation, that the first specific route is unavailable includes: Traffic forwarding from the first network device to the route prefix of the first specific route fails to be guided based on the first specific route.

In a possible implementation, the first message includes a route advertisement message.

In a possible implementation, the route advertisement message includes an extended community attribute, and the extended community attribute includes the route prefix of the aggregated route and the next-hop information.

In a possible implementation, the extended community attribute is a border gateway protocol BGP path attribute.

In a possible implementation, a type code type code of the BGP path attribute indicates that the BGP path attribute is used for carrying the route prefix of the aggregated route and the next-hop information.

In a possible implementation, the first network device is a network device that generates the aggregated route.

In a possible implementation, the first network device is a device that is at an aggregation layer and that is oriented to a core layer, the second network device is a device that is at the aggregation layer and that is oriented to an access layer or a device at the access layer, and the third network device is a device at the core layer.

FIG. 7 is a diagram of a structure of another information processing apparatus according to an embodiment of this application. The information processing apparatus 700 shown in FIG. 7 may be used in a third network device, and is configured to perform the steps that are performed by the third network device and that are provided in the foregoing method embodiments, for example, perform S104 to S106.

The information processing apparatus 700 shown in FIG. 7 includes a receiving unit 701 and a processing unit 702.

The receiving unit 701 is configured to receive a first message sent by a first network device, where the first message includes a route prefix of a first specific route, next-hop information, and a route prefix of an aggregated route, the aggregated route corresponds to the first specific route and a second specific route, the first specific route is unavailable, the first specific route is a route sent by a second network device to the first network device, the second specific route is available, the next-hop information indicates a first port, and the first port is a port that is on the first network device and that is used for communicating with the third network device.

The processing unit 702 is configured to: locally search for a routing entry corresponding to the route prefix of the aggregated route; and if next-hop information included in a found first routing entry indicates the first port and a second port, where the second port is a port that is on a fourth network device and that is used for communicating with the third network device, generate a second routing entry corresponding to the route prefix of the first specific route, where next-hop information included in the second routing entry indicates the second port.

In a possible implementation, the processing unit 702 is further configured to: if the next-hop information included in the first routing entry indicates only the first port, generate a second message based on the first message, where the second message includes the route prefix of the first specific route, next-hop information indicating a third port, and the route prefix of the aggregated route, and the third port is a port that is on the third network device and that is used for communicating with a fifth network device. The apparatus further includes a sending unit, configured to advertise the second message to the fifth network device.

In a possible implementation, that the first specific route is unavailable includes: Traffic forwarding from the first network device to the route prefix of the first specific route fails to be guided based on the first specific route.

In a possible implementation, the first message includes a route advertisement message.

In a possible implementation, the route advertisement message includes an extended community attribute, and the extended community attribute includes the route prefix of the aggregated route and the next-hop information.

In a possible implementation, the extended community attribute is a border gateway protocol BGP path attribute.

In a possible implementation, a type code type code of the BGP path attribute indicates that the BGP path attribute is used for carrying the route prefix of the aggregated route and the next-hop information.

In a possible implementation, the first network device is a network device that generates the aggregated route.

In a possible implementation, the first network device is a device that is at an aggregation layer and that is oriented to a core layer, the second network device is a device that is at the aggregation layer and that is oriented to an access layer or a device at the access layer, and the third network device is a device at the core layer.

It should be noted that hardware structures of the foregoing information processing apparatuses 600 and 700 may be a structure shown in FIG. 8. FIG. 8 is a diagram of a structure of a device according to an embodiment of this application.

Refer to FIG. 8. The device 800 includes a processor 810, a communication interface 820, and a memory 830. There may be one or more processors 810 in the device 800. FIG. 8 shows one processor as an example. In this embodiment of this application, the processor 810, the communication interface 820, and the memory 830 may be connected through a bus system or in another manner. In FIG. 8, for example, the processor 810, the communication interface 820, and the memory 830 are connected through a bus system 840.

The processor 810 may be a central processing unit (central processing unit, CPU), a network processor (network processor, NP), or a combination of a CPU and an NP. The processor 810 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 830 may include a volatile memory (English: volatile memory), for example, a random access memory (random access memory, RAM). Alternatively, the memory 830 may include a non-volatile memory (English: non-volatile memory), for example, a flash memory (English: flash memory), a hard disk drive (hard disk drive, HDD), or a solid-state drive (solid-state drive, SSD). Alternatively, the memory 830 may include a combination of the foregoing types of memories. The memory 830 may store, for example, a routing entry corresponding to a route prefix of route aggregation.

Optionally, the memory 830 stores an operating system and a program, an executable module or a data structure, a subset thereof, or an extended set thereof. The program may include various operation instructions used for implementing various operations. The operating system may include various system programs, to implement various basic services and process a hardware-based task. The processor 810 may read a program in the memory 830, to implement the information processing method provided in embodiments of this application.

The bus system 840 may be a peripheral component interconnect (peripheral component interconnect, PCI) bus, an extended industry standard architecture (extended industry standard architecture, EISA) bus, or the like. The bus system 840 may be classified into an address bus, a data bus, a control bus, and the like. For ease of representation, only one thick line is used for representing the bus in FIG. 8, but this does not mean that there is only one bus or only one type of bus. An embodiment of this application further provides a computer-readable storage medium, including instructions or a computer program. When the instructions or the computer program is run on a computer, the computer is enabled to perform the information processing method provided in the foregoing embodiments.

An embodiment of this application further provides a computer program product, including instructions or a computer program. When the instructions or the computer program is run on a computer, the computer is enabled to perform the information processing method provided in the foregoing embodiments.

An embodiment of this application further provides a communication system, including the first network device and the third network device provided in the foregoing method embodiments, and configured to perform the information processing method provided in the foregoing method embodiments.

In the specification, claims, and accompanying drawings of this application, terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical service division. In an actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or a part contributing to the related art, all or some of the technical solutions may be implemented in a form of a software product. The computer software product is stored in a storage medium, and includes several instructions for instructing a computer device (which may be a personal computer, a server, a network device, or the like) to perform all or some of the operations of the method embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When the services are implemented by using software, the services may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any available medium accessible to a general-purpose or a dedicated computer.

The objectives, technical solutions, and beneficial effects of the present invention have been further described in detail in the foregoing specific implementations. It can be understood that the foregoing descriptions are merely specific implementations of the present invention.

In conclusion, the foregoing embodiments are merely intended to describe the technical solutions of this application instead of limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, and such modifications or replacements do not cause the essence of corresponding technical solutions to depart from the scope of the technical solutions in embodiments of this application.

## Claims

1. An information processing method, applied to a first network device, wherein the method comprises:
determining that a first specific route sent by a second network device to the first network device is unavailable;
generating a first message, wherein the first message comprises a route prefix of the first specific route, next-hop information, and a route prefix of an aggregated route, the aggregated route corresponds to the first specific route and a second specific route, the second specific route is available, the next-hop information indicates a first port, and the first port is a port that is on the first network device and that is used for communicating with a third network device; and
sending the first message to the third network device.

2. The method according to claim 1, wherein before determining that the first specific route is unavailable, the method further comprises:
sending the aggregated route to the third network device, and skipping sending the first specific route and the second specific route to the third network device.

3. The method according to claim 1 or 2, wherein determining that the first specific route sent by the second network device to the first network device is unavailable comprises:
determining that a fault occurs on the second network device; or
determining that a fault occurs on a link between the second network device and the first network device.

4. The method according to claim 3, wherein that the first specific route is unavailable comprises:
traffic forwarding from the first network device to the route prefix of the first specific route fails to be guided based on the first specific route.

5. The method according to any one of claims 1 to 4, wherein the first message comprises a route advertisement message.

6. The method according to claim 5, wherein the route advertisement message comprises an extended community attribute, and the extended community attribute comprises the route prefix of the aggregated route and the next-hop information.

7. The method according to claim 6, wherein the extended community attribute is a border gateway protocol BGP path attribute.

8. The method according to claim 7, wherein a type code type code of the BGP path attribute indicates that the BGP path attribute is used for carrying the route prefix of the aggregated route and the next-hop information.

9. The method according to any one of claims 1 to 8, wherein the first network device is a network device that generates the aggregated route.

10. The method according to any one of claims 1 to 9, wherein the first network device is a device that is at an aggregation layer and that is oriented to a core layer, the second network device is a device that is at the aggregation layer and that is oriented to an access layer or a device at the access layer, and the third network device is a device at the core layer.

11. An information processing method, applied to a third network device, wherein the method comprises:
receiving a first message sent by a first network device, wherein the first message comprises a route prefix of a first specific route, next-hop information, and a route prefix of an aggregated route, the aggregated route corresponds to the first specific route and a second specific route, the first specific route is unavailable, the first specific route is a route sent by a second network device to the first network device, the second specific route is available, the next-hop information indicates a first port, and the first port is a port that is on the first network device and that is used for communicating with the third network device;
locally searching for a routing entry corresponding to the route prefix of the aggregated route; and
if next-hop information comprised in a found first routing entry indicates the first port and a second port, wherein the second port is a port that is on a fourth network device and that is used for communicating with the third network device, generating a second routing entry corresponding to the route prefix of the first specific route, wherein next-hop information comprised in the second routing entry indicates the second port.

12. The method according to claim 11, wherein the method further comprises:
if the next-hop information comprised in the first routing entry indicates only the first port, generating a second message based on the first message, wherein the second message comprises the route prefix of the first specific route, next-hop information indicating a third port, and the route prefix of the aggregated route, and the third port is a port that is on the third network device and that is used for communicating with a fifth network device; and
advertising the second message to the fifth network device.

13. The method according to claim 11 or 12, wherein that the first specific route is unavailable comprises:
traffic forwarding from the first network device to the route prefix of the first specific route fails to be guided based on the first specific route.

14. The method according to any one of claims 11 to 13, wherein the first message comprises a route advertisement message.

15. The method according to claim 14, wherein the route advertisement message comprises an extended community attribute, and the extended community attribute comprises the route prefix of the aggregated route and the next-hop information.

16. The method according to claim 15, wherein the extended community attribute is a border gateway protocol BGP path attribute.

17. The method according to claim 16, wherein a type code type code of the BGP path attribute indicates that the BGP path attribute is used for carrying the route prefix of the aggregated route and the next-hop information.

18. The method according to any one of claims 11 to 17, wherein the first network device is a network device that generates the aggregated route.

19. The method according to any one of claims 11 to 18, wherein the first network device is a device that is at an aggregation layer and that is oriented to a core layer, the second network device is a device that is at the aggregation layer and that is oriented to an access layer or a device at the access layer, and the third network device is a device at the core layer.

20. An information processing apparatus, used in a first network device, wherein the apparatus comprises:
a processing unit, configured to determine that a first specific route sent by a second network device to the first network device is unavailable, and generate a first message, wherein the first message comprises a route prefix of the first specific route, next-hop information, and a route prefix of an aggregated route, the aggregated route corresponds to the first specific route and a second specific route, the second specific route is available, the next-hop information indicates a first port, and the first port is a port that is on the first network device and that is used for communicating with a third network device; and
a sending unit, configured to send the first message to the third network device.

21. An information processing apparatus, used in a third network device, wherein the apparatus comprises:
a receiving unit, configured to receive a first message sent by a first network device, wherein the first message comprises a route prefix of a first specific route, next-hop information, and a route prefix of an aggregated route, the aggregated route corresponds to the first specific route and a second specific route, the first specific route is unavailable, the first specific route is a route sent by a second network device to the first network device, the second specific route is available, the next-hop information indicates a first port, and the first port is a port that is on the first network device and that is used for communicating with the third network device; and
a processing unit, configured to: locally search for a routing entry corresponding to the route prefix of the aggregated route; and if next-hop information comprised in a found first routing entry indicates the first port and a second port, wherein the second port is a port that is on a fourth network device and that is used for communicating with the third network device, generate a second routing entry corresponding to the route prefix of the first specific route, wherein next-hop information comprised in the second routing entry indicates the second port.

22. A device, comprising a processor and a memory, wherein
the memory is configured to store instructions or a computer program; and
the processor is configured to execute the instructions or the computer program to perform the method according to any one of claims 1 to 19.

23. A computer-readable storage medium, comprising instructions or a computer program, wherein when the instructions or the computer program is run on a computer, the computer is enabled to perform the method according to any one of claims 1 to 19.

24. A communication system, wherein the system comprises:
a first network device that performs the method according to any one of claims 1 to 10, and a third network device that performs the method according to any one of claims 11 to 19.

25. A computer program product, comprising a computer program, wherein when the computer program is run on a processor, the method according to any one of claims 1 to 19 is performed.
